# EUROPÄISCHE PATENTSCHRIFT

(11) **EP 4 086 683 B1**
(45) Veröffentlichungstag und Bekanntmachung des Hinweises auf die Patenterteilung: **13.11.2024**
(21) Anmeldenummer: 22181551.7
(22) Anmeldetag: 21.03.2020
(51) Int. Cl.: G02B 6/44

(54) **VORRICHTUNG ZUR ABLAGE EINER SPLEISSSTELLE UND EINER KABELÜBERLÄNGE**
DEVICE FOR DEPOSITING A SPLICE POINT AND AN EXCESS LENGTH OF CABLE
DISPOSITIF DE RÉCEPTION D'UNE ÉPISSURE ET D'UNE SURLONGUEUR DE CÂBLE

(43) Veröffentlichungstag der Anmeldung: 09.11.2022
(62) Teilanmeldung aus: 20164744.3
(73) Patentinhaber: Hauff-Technik GRIDCOM GmbH, 73494 Rosenberg (DE)
(72) Erfinder: Mayr, Martin, 82395 Unterföhring (DE)
(74) Vertreter: König Szynka Tilmann von Renesse Patentanwälte Partnerschaft mbB München

(56) Entgegenhaltungen:
- EP-A1- 1 333 303
- WO-A1-02/082152
- WO-A1-2017/103234
- US-A- 4 840 449

## Beschreibung

Die vorliegende Erfindung bezieht sich auf den Umgang mit Glasfaserkabeln, allgemeiner LWL-Kabeln (Lichtwellenleiter-Kabeln). Konkret geht es um eine Vorrichtung, in der mindestens eine Spleißstelle zwischen zwei LWL-Kabelenden und außerdem eine Überlänge mindestens eines LWL-Kabels abgelegt werden können.

Spleißstellen sind Verbindungsstellen zwischen LWL-Kabelenden, die ein Lichtsignal von einem in das andere Kabel übergehen lassen und daher präzise gefertigt sein müssen. Es ist an sich bekannt, dass solche Spleißstellen in einer geschützten und auch organisatorisch übersichtlichen Weise an hierfür vorgesehenen Plätzen abgelegt werden, also dauerhaft und lokalisiert gelagert werden.

Kabelüberlängen treten als Reserven für spätere Änderungen und/oder zur Vermeidung einer unnötigen Zahl von Spleißstellen regelmäßig auf, insbesondere auch in Verbindung mit Spleißstellenablagen, und müssen bei LWL-Kabeln nicht nur gegen Beschädigungen geschützt, sondern auch so untergebracht werden, dass ein bestimmter minimaler Krümmungsradius (typischerweise 30 mm) nicht unterschritten wird. Beispielsweise können Überlängen in diesem Sinn aufgewickelt und dabei in solcher Weise vorrichtungsmäßig untergebracht werden, dass eine Unterschreitung dieses Krümmungsradius praktisch ausgeschlossen ist.

Vorbekannt sind insbesondere Vorrichtungen, die eine Spleißstellenablage und in der unmittelbaren Umgebung, z. B. innerhalb derselben klappbaren Kassette oder Dose, die Ablage von Überlängen erlauben. Vorbekannt ist die US 4 840 449 A.

Der Erfindung liegt die Aufgabe zugrunde, eine hinsichtlich der Spleißstellenablage und der Überlängenablage praktisch verbesserte Vorrichtung anzugeben.

Hierzu richtet sich die Erfindung auf eine Vorrichtung zur Ablage zumindest einer Spleißstelle und Aufnahme einer Überlänge eines LWL-Kabels mit zumindest zwei relativ zueinander befestigten und durch eine Wand voneinander getrennten Elementen, wobei ein erstes der Elemente ein Behälter mit einer Ablageeinrichtung für die Spleißstelle in einem Innenraum des Behälters ist, ein zweites der Elemente eine Aufnahmeeinrichtung für die Kabelüberlänge ist, der Innenraum des ersten Elements durch eine Trennwand von dem zweiten Element getrennt ist und die Trennwand Durchführeinrichtungen zum Hindurchführen von LWL-Kabeln aufweist.

Erfindungsgemäß sind die Spleißstellen-Ablageeinrichtung einerseits und die Kabelüberlängen-Aufnahmeeinrichtung andererseits in zwei Elementen untergebracht, wobei mindestens das für die Spleißstellenablage vorgesehene erste Element ein Behälter ist und damit einen Innenraum aufweist. Dieser Innenraum ist durch eine Trennwand von dem zweiten Element getrennt, die Aufnahme der Kabelüberlänge findet also außerhalb der Spleißstellenablage statt. Dabei weist die Trennwand Durchführeinrichtungen auf, die zum Hindurchführen von LWL-Kabeln dienen.

Dabei ist der Begriff "Behälter" im Sinn eines Schutzes der Spleißstellen zu verstehen und impliziert damit z. B. keine Dichtigkeit gegen Staub oder Wasser. Im Gegenteil kann es Öffnungen z. B. zum optionalen Hindurchführen von LWL-Kabeln, zur Befestigung des Behälters oder Ähnlichem geben, die aber die Schutzfunktion nicht infrage stellen. Bei diesem Schutz geht es im Wesentlichen um die Vermeidung unbeabsichtigter mechanischer Beaufschlagung der Spleißstellenablage oder der LWL-Kabel in ihrer Nähe, etwa infolge von Arbeiten in der Umgebung der Spleißstellenablage.

Die beiden Elemente sind räumlich benachbart oder sogar vorzugsweise unmittelbar aneinander anschließend angeordnet und in diesem Zustand fixiert. Sie können vorzugsweise aneinander befestigt sein oder auch jeweils für sich an weiteren Elementen befestigt sein, etwa einem gemeinsamen Träger oder anderen Einrichtungen, die eine Fixierung der beiden Elemente relativ zueinander gewährleisten. Vorzugsweise sind die beiden Elemente lösbar aneinander befestigt und vorzugsweise außerdem jeweils an zumindest einem dritten Element befestigbar. Sie können z. B. durch eine Steckverbindung aneinander befestigt sein und jeweils Öffnungen aufweisen, mit deren Hilfe sie an einen Träger oder eine Wand angeschraubt werden können. Die beiden Elemente können aber im Prinzip auch einstückig miteinander ausgeführt sein, bspw. auch einstückig mit Sollbruchstellen zur Trennung voneinander.

Die Trennwand kann je nach Anwendungsfall und Prioritätensetzung unterschiedliche Vorteile mit sich bringen: So kann mit der erfindungsgemäßen Ablagevorrichtung eine gewisse Zuständigkeitstrennung gewährleistet werden, etwa indem ein Techniker für ein erstes Unternehmen, z. B. einen größeren Telekommunikationsanbieter, in dem ersten Element, also dem Behälter, einen Anschluss oder Abschluss vorbereitet und Spleißstellen vorsieht und ablegt. Zum Beispiel könnte in dieser Weise ein von einer zentraleren Stelle bzw. niedrigeren Netzebene kommendes LWL-Kabel über zumindest eine Spleißstelle an ein lokales Kabel angeschlossen werden und könnte das hierfür zuständige Unternehmen oder der hierfür zuständige Techniker danach den Behälter verschließen und vorzugsweise auch gegen unbefugten Zugriff in einer gewissen Form sichern. Für eine solche Sicherung käme zum Beispiel eine Verplombung oder ein Verschluss mit einem nur mit Spezialwerk zu öffnenden Element in Betracht, etwa mit einer Schraube mit einem speziellen Schraubenkopf.

Das lokale Kabel kann dabei z. B. zu einem Steckverbindungsplatz als konkrete Implementierung einer Durchführeinrichtung in der Trennwand führen und damit zum Anschluss eines weiterführenden Kabels vorbereitet sein. Wenn nun nachfolgend, insbesondere zu einem späteren Zeitpunkt (vorzugsweise mindestens einen Tag später) ein anderer Techniker einen Anschluss vornimmt, also z. B. ein weiteres Kabel an einem solchen Steckverbindungsplatz einsteckt, ist kein Zugriff mehr auf den Innenraum des Behälters notwendig. Gleichzeitig hat aber dieser zweite Techniker die Möglichkeit, Überlängen des durch ihn anzuschließenden LWL-Kabels in der Aufnahmeeinrichtung, also dem zweiten Element, abzulegen.

Als Durchführeinrichtungen kommen neben Steckverbindungsplätzen auch Aufnahmen dafür in Betracht. Es kann also z. B. die erfindungsgemäße Vorrichtung mit den beiden Elementen noch ohne Steckverbindungsplätze ausgeliefert werden und es könnte der erste der erwähnten Techniker seinerseits erst entsprechende Elemente einer Steckverbindung an dem Aufnahmeplatz vorsehen. Es ist aber auch eine Durchgangsöffnung in der Trennwand möglich, durch die zumindest ein durchgehendes (nicht unterbrochenes) LWL-Kabel hindurch laufen kann. Dieses könnte dann der zweite Techniker weiterführen oder in dem zweiten Element oder an anderer Stelle anschließen. Auch hierbei kann die Aufnahmemöglichkeit für Überlängen in dem zweiten Element praktisch sein. Schließlich sind auch Soll-Ausbruchstellen zur Herstellung solcher Aufnahmen oder Durchgangsöffnungen möglich und es kann durch den ersten Techniker überhaupt erst eine solche Öffnung hergestellt werden.

Eine andere Möglichkeit, die sich mit der obigen durchaus nicht ausschließt, besteht in der wahlweisen Benutzung des ersten Elements mit oder ohne das zweite Element. Es kann also eine kombinierte Ablagevorrichtung für Spleißstellen und für die Kabelüberlängenaufnahme zur Verfügung stehen, wobei ein Techniker wahlweise das zweite Element weglässt, wenn bspw. keine externe Aufnahmemöglichkeit für Kabelüberlängen notwendig oder zu wenig Platz ist.

Vorzugsweise weist das zweite Element, also die Aufnahmeeinrichtung, eine (von der Trennwand verschiedene) Außenwand auf, die ihrerseits Durchführeinrichtungen zum Hindurchführen von LWL-Kabeln enthält. Bevorzugt ist das zweite Element ebenfalls ein (zweiter) Behälter und damit diese Außenwand Teil der Behälterau-ßenwände. Hinsichtlich des Begriffs "Behälter" gilt im Prinzip das Obige, nämlich dass es hier im Wesentlichen um die Schutzfunktion geht, hier in Bezug auf die abgelegten Kabelüberlängen. Für die Durchführeinrichtungen und ihre konkrete Implementierung gilt ebenfalls das Obige, wobei hier außerdem sogenannte Einzelzugabdichtungen ("EZA") in Betracht kommen. Mit solchen Durchführeinrichtungen können ein- und abgehende LWL-Kabel gehalten bzw. in den zweiten Behälter hineingebracht werden, etwa um durch ihn hindurch in den ersten Behälter und dort zu einer Spleißstelle weiterzulaufen (bzw. in umgekehrter Richtung von dort zu kommen). Insbesondere können natürlich das oder die in dem zweiten Element mit einer Überlänge aufzunehmenden Kabel durch eine solche Durchführeinrichtung durch die Außenwand laufen.

Eine bevorzugte Möglichkeit der Unterbringung einer solchen Überlänge besteht im Aufwickeln, und zwar vorzugsweise so, dass die einzelnen Wicklungen im Wesentlichen koplanar zueinander sind und damit eine Wicklungsebene vorgeben. Bei einer wiederum bevorzugten Ausführung sind die beiden Elemente, d. h. der erste Behälter und die Aufnahmeeinrichtung (bzw. der zweite Behälter) in Bezug auf diese Ebene ebenfalls koplanar nebeneinander angeordnet und befestigt. Die Kabelführung innerhalb der beiden Elemente findet dann vorzugsweise weitgehend in einer solchen Ebene statt.

Die Aufnahmeeinrichtung ist für die Aufnahme der Wicklungen vorzugsweise statisch ausgelegt, weist also insbesondere keine Rolle oder anderen zur Herstellung der Wicklungen drehbaren Elemente auf. Vielmehr werden die Wicklungen manuell erzeugt und zumindest in einer äußeren Begrenzung für die Kabelwicklungen in der Aufnahmeeinrichtung abgelegt. Dabei können vorzugsweise Niederhalter für die Kabelwicklungen vorgesehen sein, bspw. über den abgelegten Wicklungen angeordnete und diese in der Aufnahmeeinrichtung haltende Stege o. Ä., durch die Kabel in besonderer Weise (z. B. durch leichtes Verbiegen oder Hindurchfädeln durch eine Engstelle) hindurch geführt werden müssen, aber nicht von allein ohne weiteres wieder heraus gelangen). Ferner ist vorzugsweise eine innere Begrenzung für die Kabelwicklungen vorgesehen. Weder die äußere noch die innere Begrenzung müssen dabei lückenlos sein, weil die LWL-Kabel eine gewisse Steifigkeit aufweisen und damit Lücken zwischen den unterstützenden Elementen nicht relevant sind, soweit sie nicht zu große Distanzen einnehmen.

Die Möglichkeit eines Verschließens des ersten Behälters wurde bereits erwähnt und gilt natürlich insbesondere im Fall einer Ausgestaltung des zweiten Elements als zweiter Behälter. Dann ist der erste Behälter vorzugsweise unabhängig von dem zweiten verschließbar und der zweite im verschlossen Zustand des ersten zugänglich. Grundsätzlich kann das auch umgekehrt gelten, wobei die geschilderten Aspekte im Hinblick auf die Überlängenaufnahme im zweiten Behälter im Regelfall nicht in gleicher Weise zutreffen.

In Verbindung mit den Durchführeinrichtungen in der Außenwand des zweiten Elements und der koplanaren Anordnung in der Wicklungsebene ist eine Geometrie bevorzugt, bei der ein LWL-Kabel durch eine solche Durchführeinrichtung in der Außenwand geführt und in dem zweiten Element parallel zu der beschriebenen Wicklungsebene, aber außerhalb des für die eigentliche Aufnahme der Kabelwicklungen vorgesehenen Bereichs weiterläuft, insbesondere im Wesentlichen gerade, und zwar bis zu einer weiteren Durchführeinrichtung, nämlich in der Trennwand. Diese Durchführeinrichtung kann z. B. eine Durchgangsöffnung sein, auch abgedichtet oder gegen Zug abgefangen.

Von dort kann dieses LWL-Kabel (insbesondere noch immer ununterbrochen) innerhalb des ersten Elements, also Behälters zu einer Spleißstelle in diesem geführt sein. Der Eintritt in den ersten Behälter erfolgt dabei vorzugsweise außermittig in Bezug auf die Trennwand. Außerdem können in dem ersten Behälter ebenfalls Möglichkeiten zur Aufnahme von Kabelüberlängen vorgesehen sein, sodass der die Spleißstelle erzeugende und ablegende Techniker dementsprechend mit einer Überlänge des beschriebenen LWL-Kabels arbeiten kann. Dieses vorzugsweise einlaufende Kabel wird also hinsichtlich Überlänge in dem ersten Behälter aufgenommen, nicht in dem zweiten.

Vorzugsweise an einer zu der beschriebenen außermittigen Anordnung der Durchführeinrichtungen der Trennwand entgegengesetzten Seite dieser Trennwand ist bei dieser bevorzugten Ausgestaltung eine weitere Durchführeinrichtung, nämlich ein Steckverbindungsplatz oder eine hierfür vorgesehene Soll-Ausbruchstelle, angeordnet, sodass ein von der Spleißstelle aus kommendes LWL-Kabel über eine entsprechende Steckverbindung durch die Trennwand geführt werden kann. In der bereits eingangs erläuterten bevorzugten Trennung von Zuständigkeiten wird zunächst dieses LWL-Kabel an dem Steckverbindungsplatz vorbereitet, aber noch kein Kabel weitergeführt. Entsprechend dieser Trennung wird dann später (und bei Verzicht auf diese Trennung üblicherweise auch gleich) von dem Steckverbindungsplatz ein LWL-Kabel weitergeführt, nämlich tangential in den Bereich zur Aufnahme der Kabelwicklungen in dem zweiten Element hinein.

Die Überlängen in dem zweiten Element betreffen also vorzugsweise dieses weiterführende Kabel, das vorzugsweise ein abgehendes (das Signal weiter transportierendes) Kabel ist. Bevorzugt verlässt es den Kabelwicklungs-Aufnahmebereich ebenfalls tangential und gelangt in dieser Form zu einer weiteren Durchführeinrichtung in der Außenwand des zweiten Elements, bspw. einer Einzelzugabdichtung. Zur Veranschaulichung wird auf das Ausführungsbeispiel verwiesen.

In der gerade beschriebenen Form bietet die Erfindung eine praktische und einfache Möglichkeit der Ablage zumindest einer oder auch einer Mehrzahl Spleißstellen in dem ersten Element, also ersten Behälter, der Aufnahme von Kabelüberlängen mindestens im zweiten Element und vorzugsweise (anderer Überlängen) auch in dem ersten Element und der praktischen Unterbringung von Durchführungen bzw. Steckverbindungen in einer Trennwand dazwischen und einer Außenwand. Damit können die eingangs bereits erwähnten praktischen Vorteile erzielt werden, und zwar ohne Mehrfachkassetten-Stapel, bewegliche, insbesondere Klappkassetten, sowie andere beweglich gelagerte Teile, etwa zum Aufwickeln und Ähnlichem. Allenfalls sind elastisch auslenkbare Elemente, bspw. Niederhalteelemente für die Kabel, notwendig. Im Übrigen kann man sich auf sehr einfache und zuverlässige Strukturen beschränken.

In dieser Form kann die erfindungsgemäße Ablagevorrichtung besonders kompakt ausgeführt sein, bspw. mit Außendimensionen von nicht über 150 mm Breite, wobei die Obergrenzen 140, 130, 120, 110 und schließlich 100 mm zunehmend bevorzugt sind. Für die Höhe (bezogen auf die Darstellung in den Figuren) gilt dementsprechend für die Gesamtvorrichtung eine bevorzugte Obergrenze von 350 mm, wobei zunehmend bevorzugt sind: 330, 310, 290, 280, 270, 260, 250, 240 und schließlich 230 mm. Für die Tiefe sind bevorzugte Obergrenzen: 50, 45, 40, 35 und schließlich 30 mm. Dies teilt sich vorzugsweise so auf, dass der erste Behälter die gleichen Grenzen hinsichtlich Breite und Tiefe einhält, aber hinsichtlich der Höhe folgende Obergrenzen: 210, 190, 170, 160, 150, 140 mm. Für den zweiten Behälter gelten bei ebenfalls gleicher Breite und Tiefe folgende bevorzugte Obergrenzen für die Höhe: 140, 130, 120, 110, 100 und schließlich 90 mm.

Dies gilt insbesondere für das Ausführungsbeispiel mit zwölf Spleißstellenablageplätzen, wobei typischerweise davon die Hälfte aktiv benutzt wird, und sechs Steckverbindungsplätzen in der Trennwand. Eine in dieser Form kleine Ablagevorrichtung eignet sich besonders gut für z. B. Wohnungs- oder EFH-Abschlüsse, bspw. an einer Zimmer- oder Kellerwand.

Eine besonders bevorzugte Anwendung besteht im Erdeinbau. Dazu kann die beschriebene Ablagevorrichtung kombiniert werden mit einem Außengehäuse zum Erdeinbau, vorzugsweise zusätzlich mit einem in dem Außengehäuse vorzusehenden Abdichtgehäuse. Die Aufgabe der Abdichtung gegen Wasser oder Feuchtigkeit kann also von dem Außengehäuse entkoppelt darin separat vorgesehen werden. Jedenfalls, auch ohne Abdichtgehäuse und bei abdichtendem Außengehäuse, kann die Ablagevorrichtung darin an einem Träger befestigt sein, insbesondere mit im eingebauten Zustand vertikaler Orientierung der Wicklungsebene. Es können auch eine Mehrzahl Ablagevorrichtungen vorgesehen sein, bspw. ein Paar Rücken an Rücken. Vorzugsweise liegt die zumindest eine Ablagevorrichtung dabei so, dass die beiden Elemente vertikal übereinander angeordnet sind, vorzugsweise das erste über dem zweiten.

Wie bereits erläutert, können in beiden Elementen Kabelüberlängen aufgenommen werden, vorzugsweise in dem ersten von einer niedrigeren Netzebene eingehende und vorzugsweise in dem zweiten in Richtung zu einem Teilnehmerabschluss ausgehende Kabel. Besonders bevorzugterweise wird dabei schrittweise zunächst ersteres durchgeführt und danach zweiteres. Bei dem zweiten Schritt kann vorzugsweise ein vorkonfektioniertes LWL-Kabel benutzt werden, das auf der Seite zu der erfindungsgemäßen Ablagevorrichtung bereits mindestens eine Ferrule oder auch ein Steckerverbindungselement aufweist.

Bei einer Ferrule handelt es sich gewissermaßen um den (meistens keramischen) Kern eines Steckverbindungselements, aber noch ohne äußere (vorzugsweise Kunststoff-)Umhüllung. Mit einer Ferrule vorkonfektionierte LWL-Kabel können durch relativ kompakte Rohre hindurchgeführt werden, insbesondere durch ein an der Ablagevorrichtung bereits vormontiertes Schutzrohr hindurch, das z. B. beim Erdeinbau oder sonst wie bei der Installation der erfindungsgemäßen Ablagevorrichtung vorgesehen wurde, und können so wie auch der von der niedrigeren Netzebene her bereits erfolgte Anschluss bis einschließlich zu den Spleißstellen für eine spätere Nutzung bereitgestellt sein. Wenn diese spätere Nutzung dann erfolgen soll, kann ein solches vorkonfektioniertes Kabel mit der Ferrule voran durchgeschoben werden, dann zu einem Steckelement ergänzt und in einen Steckverbindungsplatz in der Trennwand eingesteckt werden. In solcher Weise kann also dann z. B. ein Teilnehmerabschluss besonders leicht nachträglich fertiggestellt werden.

Dies kann insbesondere auch im Fall des Erdeinbaus geschehen, wozu bei der Vorbereitung und bei der Fertigstellung jeweils auf die erfindungsgemäße Ablagevorrichtung zugegriffen werden muss, diese aber dazwischen z. B. im Vorgarten eines Hauses oder im Straßenbereich längere Zeit eingegraben auf ihren Einsatz warten kann.

Die vorstehenden Aspekte beziehen sich einerseits auf die Vorrichtungskategorie, also auf entsprechend ausgestaltete Ablagevorrichtungen, auch in Kombination mit weiteren Teilen, andererseits auch auf die Verwendungs- und die Verfahrenskategorie. Die technische Offenbarung ist dementsprechend in all diesen Kategorien zu verstehen, ohne dass hierzwischen noch explizit unterschieden wird.

Im Folgenden wird ein Ausführungsbeispiel näher erläutert.

Dabei zeigt:
- Figur 1: eine perspektivische Ansicht a) und eine Draufsicht b) einer erfindungsgemäßen kombinierten Ablagevorrichtung mit geöffneten Deckeln,
- Figur 2: die Draufsicht auf die Ablagevorrichtung aus Figur 1 in drei Varianten a), b) und c),
- Figur 3: eine Einzeldarstellung des ersten Elements der Ablagevorrichtung aus den Figuren 1 und 2 in Draufsicht,
- Figur 4: das erste Element aus Figur 3 in perspektivischer Ansicht,
- Figur 5: das zweite Element aus den Figuren 1 und 2 in perspektivischer Ansicht und ohne Deckel,
- Figur 6: eine Draufsicht zu Figur 5,
- Figur 7: eine perspektivische Ansicht zweier erfindungsgemäßer kombinierter Ablagevorrichtungen mit einem Abdichtgehäuse,
- Figur 8: eine schematische Darstellung der Kombination aus Figur 7 mit einem zusätzlichen Außengehäuse.

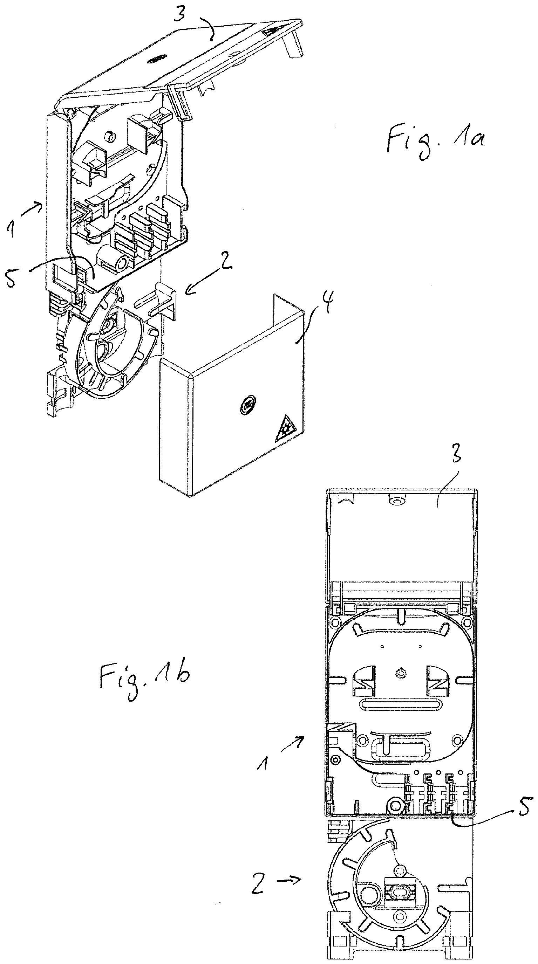

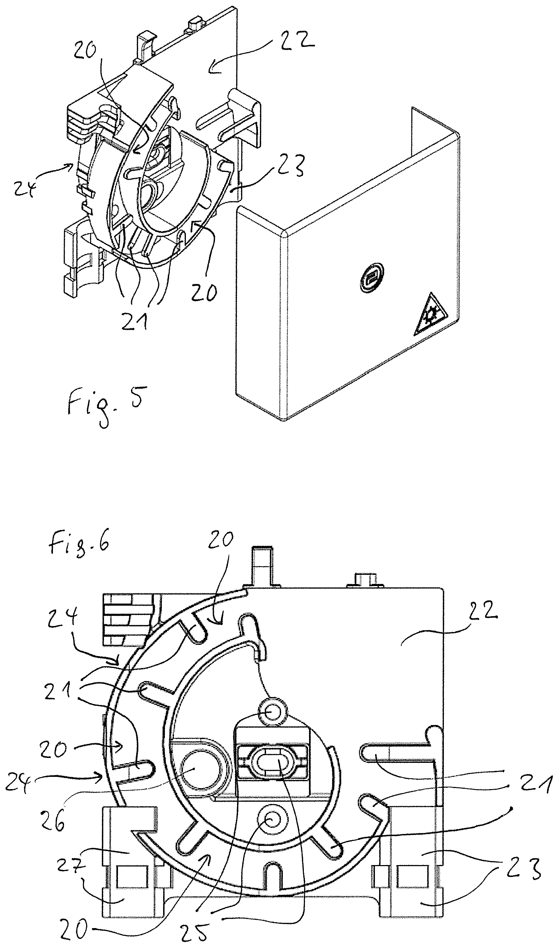

**Figur 1** zeigt eine erfindungsgemäße Ablagevorrichtung in perspektivischer Darstellung und im kombinierten Zustand in Teil a) und als Figur 1b) eine Draufsicht darauf. Dabei sieht man oben das erste Element 1 und unten das zweite Element 2, wobei diese jeweils als (erster bzw. zweiter) Behälter ausgeführt sind und einen im wesentlichen rechteckigen Grundriss haben (im Fall des zweiten Behälters quadratisch). Die beiden Behälter 1 und 2 sind dabei durch Deckel 3 und 4 abdeckbar, wobei der Deckel 3 des ersten Behälters um eine in Figur 1b) oben querliegende Achse klappbar ist und in der Figur 1 offensteht und der Deckel 4 des zweiten Behälters abnehmbar und in Figur 1a) vor diesem eingezeichnet ist. Die beiden Behälter 1 und 2 liegen mit einer jeweiligen Außenwand aneinander an, wobei die untere Außenwand des ersten Behälters 1 mit 5 bezeichnet ist und die in der bisherigen Beschreibung so bezeichnete Trennwand bildet. An diesen beiden aneinander anliegenden Außenwänden sind die Behälter über hier nicht eingezeichnete, aber in den Figuren 5 und 6 teilweise sichtbare Verbindungsmittel aneinander lösbar befestigt und bilden insoweit in dem Zustand in Figur 1 (bei zusätzlich geschlossenen Deckeln) eine in sich geschlossene Einheit.

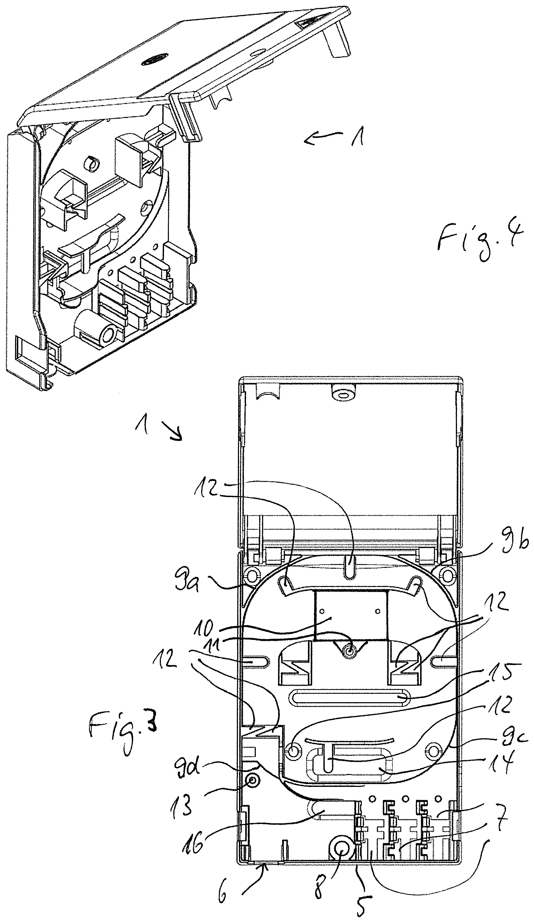

Andererseits sind die beiden Elemente 1 und 2 trennbar und kann insbesondere das erste Element 1 ohne das zweite Element 2 eingesetzt werden. Sie sind getrennt voneinander in den Figuren 3 und 4 einerseits und andererseits in den Figuren 5 und 6 dargestellt, auf die wegen weiterer Einzelheiten Bezug genommen wird.

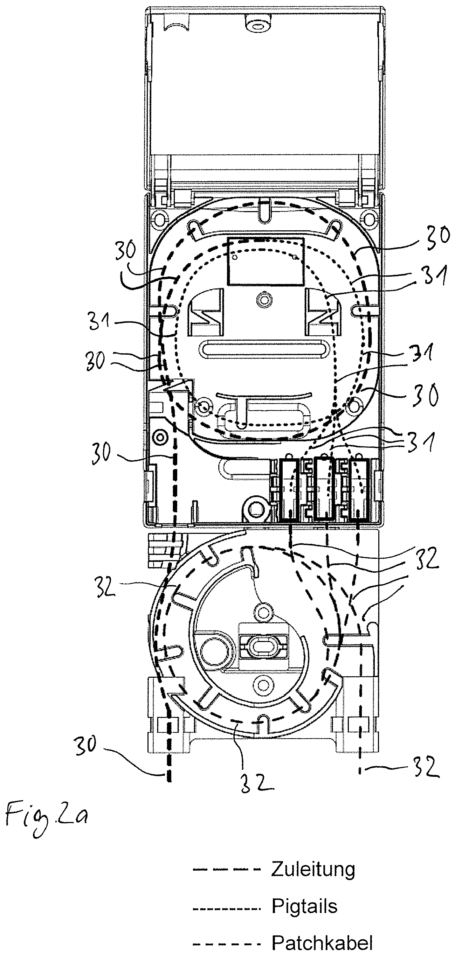

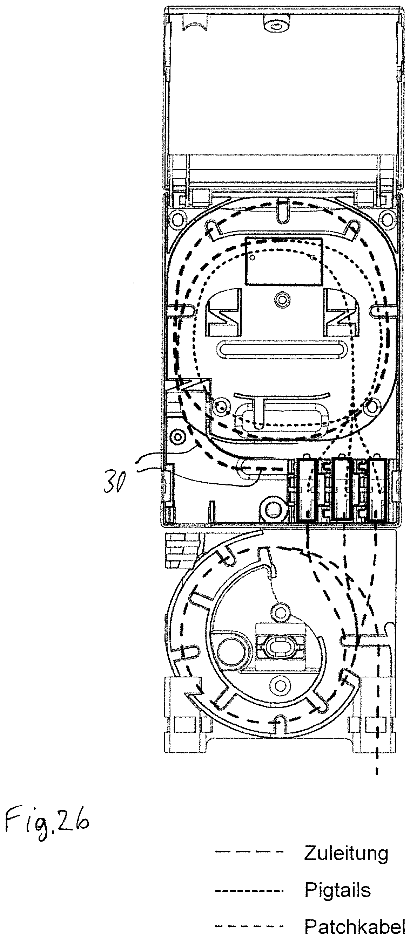

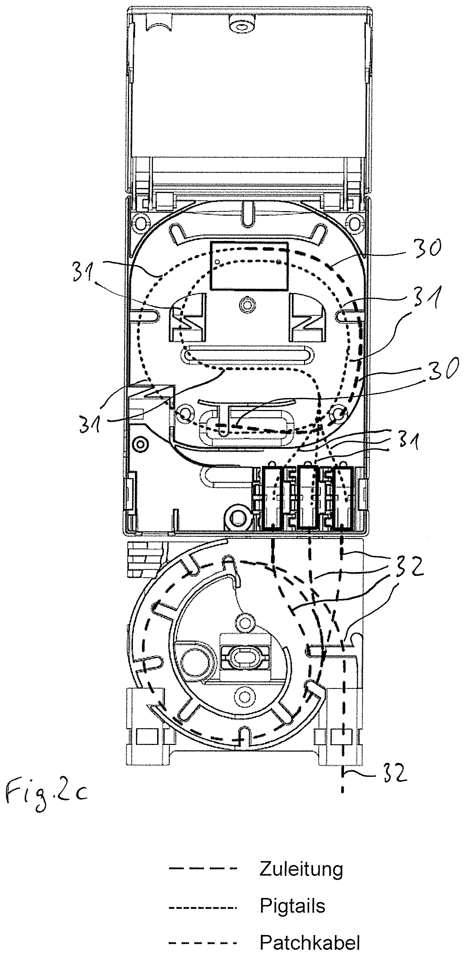

In den **Figuren 3 und 4** erkennt man den inneren Aufbau des ersten Behälters 1 deutlicher. In der unten querliegenden Trennwand 5 sind links am Rand eine Durchgangsöffnung 6 (Soll-Ausbruchstelle) für ununterbrochene LWL-Kabel und rechts drei nebeneinanderliegende Aufnahmen für Steckverbindungsplätze 7 für LWL-Kabel eingezeichnet, wobei die Steckverbindungsplätze tatsächlich doppelt übereinanderliegen, also in der Gesamtzahl sechs betragen und in den Figuren 2, 2a) - c) angedeutet sind. Es kann sich z. B. um LC-Duplexsteckverbindungen handeln.

Anschließend an die Trennwand 5 sieht man außerdem noch ein Durchgangsloch 8 in einer angeformten Hülse, zu dem es ein komplementäres Durchgangsloch 9 in dem Deckel 3 gibt. Im geschlossenen Zustand liegen beide aufeinander und der erste Behälter 1 kann in dem verschlossenen Zustand mithilfe dieser Durchgangslöcher 8 und 9 gesichert werden. In Betracht kommt das Hindurchschlingen einer verplombten Schlaufe oder das Einschrauben (bezüglich Figur 2 z. B. in Blickrichtung) einer speziellen Schraube, die nur mit einem besonderen Werkzeug zu öffnen ist (z. B. eine sogenannte Rillenschraube). Damit kann nach Abschluss von Installationsarbeiten darin der erste Behälter 1 verschlossen und gesichert werden.

In Figur 3 und in Figur 4 weiter oben erkennt man an den gerundeten Außenwänden 9 eine Aufnahmeeinrichtung für Wicklungen von Kabelüberlängen und in Figur 3 darin beim Bezugszeichen 10 ein Element mit zwölf in den Figuren übereinander und parallel zueinander horizontal angeordnete Spleißstellenaufnahmen. Das entsprechende Element ist über eine Befestigungseinrichtung 11 eingesteckt und fehlt in Figur 4.

Das Bezugszeichen 12 ist für verschiedene Elemente eingetragen, die allesamt Kabelniederhalter sind und eingelegte Kabel, insbesondere Kabelwicklungen, an einem Herausspringen hindern. Es handelt sich hier um einfache Stege in der Ebene der Figur, die an einer Seite nicht ganz bis zur Gegenseite reichen und damit eine Öffnung lassen. Durch diese Öffnung kann das Kabel eingelegt werden und im Übrigen halten die Kabel unter den Stegen im Wesentlichen infolge ihrer Steifigkeit, mit der sie im Rahmen der geometrischen Vorgaben versuchen, ihren jeweiligen Krümmungsradius zu maximieren. Das ist an sich bekannt und üblich.

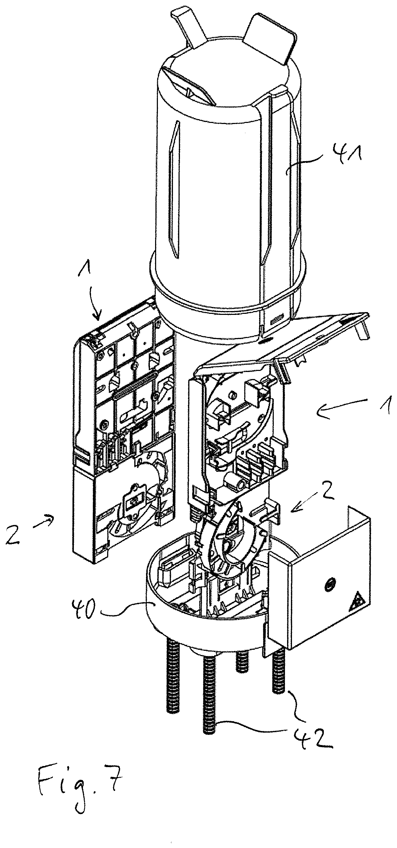

Mit 13 ist eine Aufnahme für eine Schraube bezeichnet, um einen Verstärkungsfaserteil eines durch die Durchgangsöffnung 6 eingehenden Kabels zu befestigen. Es wird also im Bereich der Durchgangsöffnung der Kabelmantel in an sich bekannter Weise geöffnet, der Verstärkungsfaserteil (typischerweise Aramidfasern) mit einer Schraube an der Öffnung 13 befestigt (z. B. um den Schraubenschaft geschlungen und dann festgezogen). 14 bezeichnet eine Öffnung in der im Sinn der Figuren untenliegenden Grundplatte, durch die insbesondere bei einer "Rücken an Rücken"-Montage (vergleiche Figur 7) ebenfalls Kabel ein- und auslaufen können. Die Öffnungen 15 dienen der Befestigung z. B. mit Schrauben an einem Träger (vergleiche Figur 7) oder an einer Wand.

Die **Figuren 5 und 6** zeigen das zweite Element, also das in den Figuren 1 und 2 untere, in perspektivischer Ansicht in Figur 5 und Draufsicht in Figur 6. Die Figuren 5 und 6 zeigen dabei vor allem eine Aufnahmeeinrichtung 20 für Kabelwicklungen, die hier als Ausnehmung mit Kreisring-Grundriss und Niederhaltern 21 ausgebildet ist. Sie ist über einen relativ breiten Hohlraum 22 (mit Rücksicht auf die Steckverbindungsplätze 7) und einen schmaleren Hohlraum 23 für eine EZA "nach außen angeschlossen" und links von ihr, teils hinter ihr läuft ebenfalls eine im Wesentlichen vertikal durchgehende Ausnehmung 24 zum Anschluss an die Durchgangsöffnung 6 durch. Unten bei 27 ist dort ebenfalls die Aufnahme einer EZA vorgesehen. Die bei 23 und bei 27 aufzunehmenden EZA bilden jeweils einen Schutzrohrabschluss für außerhalb des zweiten Behälters 2 verlaufende Zu- und Abgangsrohre mit einem typischen Außendurchmesser von 7 mm oder 10 mm. Das Zugangsrohr bei 27 kommt z. B. von einem Netzverteiler, etwa der Netzebene 3, und das Abgangsrohr bei 23 führt z. B. zu einem Ein- oder Zweifamilienhaus oder einer Wohneinheit in einem Mehrfamilienhaus. Ansonsten gibt es Befestigungslöcher 25. Das große Loch 26 links von der Mitte dient zur Befestigung des Deckels über einen Rastzapfen an diesem.

Durch die Ausnehmung 24 können Kabel zu der Durchgangsöffnung 6 durch das zweite Element hindurchlaufen und die Ausnehmung 20 nimmt Überlängen von Kabeln zwischen der in der Ausnehmung 23 untergebrachten EZA einerseits und den Steckverbindungsplätzen 7 andererseits auf.

Die Figur 2 zeigt in drei Varianten a), b) und c) Beispiele für die Kabelführung in den beiden zusammengefügten Elementen 1 und 2. Dabei werden drei Fälle unterschieden und wird die Kabelführung anhand der eingezeichneten schraffierten Linien verdeutlicht.

Im Fall a) ganz links kommt ein eingehendes Zuleitungskabel 30 links unten über ein Zugangsrohr und eine EZA (Einzelzugabdichtung) in der Ausnehmung 24 des zweiten Elements 2 an und läuft im Wesentlichen nach oben durch diese Ausnehmung durch, um oben durch die Durchgangsöffnung 6 in der Trennwand 5 in den ersten Behälter 1 eingeführt zu werden. Dort läuft das Zuleitungskabel 30 außen links weiter, um dann im oberen Bereich oberhalb der Spleißstellenablagen 10 nach rechts und dann nach unten umgelenkt zu werden und in den Aufnahmebereich für Wicklungen einzulaufen.

Nach ungefähr z. B. eineinviertel Umdrehungen läuft das Zuleitungskabel zu einer abgelegten Spleißstelle in dem entsprechenden Bereich 10 und ist dort verspleißt mit einem Pigtail-Kabel 31 (kürzere Schraffur). Dieses Pigtail-Kabel 31 vollzieht in dem Aufnahmebereich für Überlängen z. B. wieder etwa eineinviertel Umdrehungen (und liegt dabei zum Schluss über den Spleißstellenablagen), um dann nach unten zu den Steckverbindungsplätzen 7 zu laufen. Hier sind Übergänge zu drei Steckverbindungsplätzen gezeigt, was symbolisieren soll, dass die Kabel 30 und 31 keine Einzelkabel, sondern auch Bündel sein können und damit auch mehrere Spleißstellen betroffen sein können.

Unterhalb der Steckverbindungsplätze 7 laufen über Letztere an die Pigtail-Kabel 31 angeschlossene Patchkabel 32 in die Aufnahmeeinrichtung für Überlängen in dem zweiten Element 2 ein, und zwar konkret durch die Ausnehmung 22 in die Ausnehmung 20. Dort sind eine entsprechende Zahl von Wicklungen untergebracht, wobei die entsprechenden Kabel letztlich als Bündel durch die EZA rechts unten hinaus geführt werden zu einem Teilnehmerabschluss.

Bei der Variante b) in der Mitte unterscheidet sich der Eintritt des Zuleitungskabels 30. Dieses durchläuft nicht das zweite Element 2, sondern kommt z. B. aus einer hinter dem ersten Behälter 1 liegenden unter Putz-Anschlussdose (nicht gezeigt) nach links durch das Langloch 16 in den ersten Behälter 1 hinein. In der Figur sieht man, dass eine darüber liegende Wand dementsprechend als Anlagefläche gekrümmt ist. Das Zuleitungskabel 30 läuft dann in gleicher Weise wie links bei a) im Uhrzeigersinn weiter zu der entsprechenden Spleißstelle und der Rest entspricht den Erläuterungen zu a). Diese Variante ist bei einer Aufputzmontage auf einem Anschluss vorteilhaft.

Die dritte Variante c) ganz rechts kann z. B. vorteilhaft sein, wenn die aus den beiden Elementen 1 und 2 bestehende Vorrichtung doppelt und Rücken an Rücken verwendet wird, wie z. B. in Figur 7. Dementsprechend kann es gewünscht sein, ein Zuleitungskabel 30 aus einem der beiden ersten Behälter 1 heraus in den anderen zu überführen. Hierzu können die dabei ungefähr gegenüberliegend zueinander liegenden jeweiligen Öffnungen 14 benutzt werden. In der nicht gezeichneten der beiden Ablagevorrichtungen, konkret im ersten Behälter 1, läuft dabei das Zuleitungskabel von unten wie bei der Variante a) kommend innerhalb des ersten Behälters 1 im Uhrzeigersinn um und tritt durch das dortige Loch 14 nach hinten aus, also in diesem ersten Behälter (nicht gezeigt) im Uhrzeigersinn.

Dementsprechend tritt es in dem gezeichneten ersten Behälter (Variante c)) gegen den Uhrzeigersinn durch die Öffnung 14 ein. Im Unterschied zu der Öffnung 16 sind nunmehr die Steckverbindungsplätze 7 nicht im Weg und das Zuleitungskabel kann durch den Wicklungsaufnahmebereich bis zu einem Spleißstellenablageplatz im Bereich 10 geführt werden, hier über eine halbe Umdrehung. Dort ist es verspleißt mit einem Pigtail-Kabel 31 wie auch bei den Varianten a) und b), jedoch mit umgekehrtem Drehsinn. Dieses Pigtail-Kabel 31 vollzieht z. B. eine volle Wicklung (oder auch mehr) und läuft dann durch den Niederhalter 12 links unter dem Spleißstellenablagebereich 10 nach unten. Von dort wird es zu den Steckverbindungsplätzen 7 geführt, wie eingezeichnet.

Die in der Figur 2c) eingezeichnete Linie ist dabei relativ stark gekrümmt, was nicht notwendig ist. Insbesondere ist der Steg 17 in seinem rechten Bereich abgeflacht und können damit die Patchkabel gut über diesen hinweg geführt werden, womit sich eine weniger gekrümmte Linie ergibt. Insbesondere können die üblichen Einschränkungen bezüglich des Krümmungsradius von 30 mm eingehalten werden, wobei allerdings gerade für solche "inneren" Pigtail-Kabel regelmäßig Kabel Verwendung finden, die deutlich kleinere Krümmungsradien zu lassen.

**Figur 7** zeigt die Kombination aus den beiden Elementen 1 und 2 doppelt, und zwar "Rücken an Rücken". Beide sind über Schraubverbindungen an einem vertikalen Blechstreifen (nicht zu sehen) angeschraubt, der seinerseits auf der Basis 40 in Figur 7 montiert ist. Diese Basis 40 bildet mit einer Haube 41 ein Abdichtgehäuse, insbesondere gegen Wasser. Dabei muss die Verbindung zwischen der Basis 40 und der Haube 41 nicht zwingend wasserdicht sein und muss insbesondere die Basis 40 hinsichtlich der verschiedenen Durchführungen nicht zwingend wasserdicht sein, weil das Abdichtgehäuse wie gezeichnet vertikal mit nach unten gerichteter Öffnung der Haube 41 benutzt wird. In diesem Sinn funktioniert die Haube dann als Tauchglocke und hält ihr Inneres wegen der dort eingeschlossenen Luft von Wasser frei.

Unter der Basis 40 sind Schutzrohre 42 von LWL-Kabeln eingezeichnet und am oberen Rand der Haube 41 gibt es hakenartige Strukturen, mit denen diese in einer anderen Struktur schwebend eingehängt werden kann.

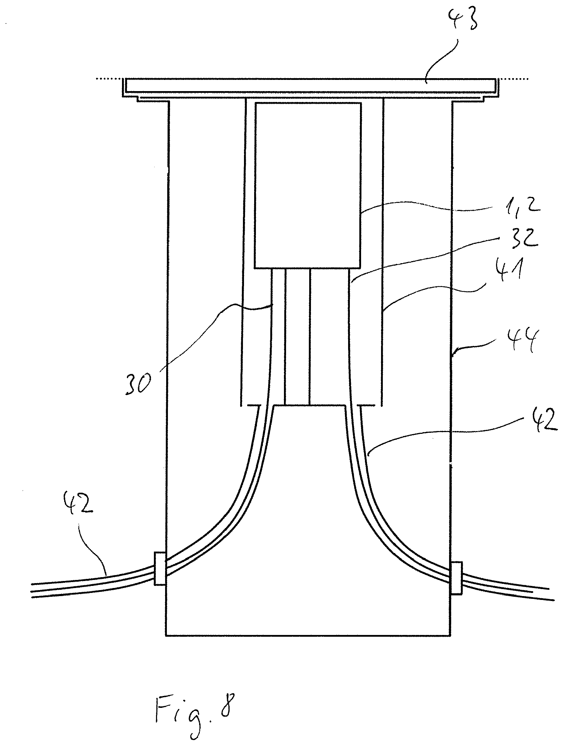

Insbesondere kann die Tauchglocke analog der schematischen Zeichnung aus Figur 8 von einem Deckel 43 herabhängen und dabei an den Außenwänden eines Topfes 44 (über die Haken) getragen sein, der mit dem Deckel 43 ein Außengehäuse zum Erdeinbau bildet. Dieses Außengehäuse bildet im Wesentlichen einen mechanischen Schutz und Figur 8 zeigt, dass die Schutzrohre 42 aus Figur 7 im unteren Bereich aus diesem Außengehäuse heraus ins Erdreich weitergeführt sind.

Ein Beispiel für typische bevorzugte Innenvolumina des in Figur 7 gezeigten Abdichtgehäuses liegt zwischen 1 l und 10 l, auch unabhängig von diesem konkreten Ausführungsbeispiel. Dabei können 2 l und 3 l als Untergrenzen einerseits und andererseits 8 l und 7 l als Obergrenzen zunehmend bevorzugt sein. Als vertikale Höhe für das äußere Außengehäuse aus den Teilen 43 und 44 kommen (wiederum auch unabhängig von diesem konkreten Beispiel) Abmessungen zwischen 40 cm und 100 cm in Betracht, wobei obere Grenzen von 80 cm oder 70 cm einerseits und andererseits eine untere Grenze von 50 cm zunehmend bevorzugt sind. Die Innenvolumina können bspw. zwischen 20 l und 100 l mit zunehmend bevorzugten Untergrenzen von 30 l und 40 l bzw. 50 l sowie zunehmend bevorzugten Obergrenzen von 90 l, 80 l, 70 l und 60 l liegen.

Hinsichtlich der möglichen Vorgehensweisen bei der Installation, insbesondere der Vorbereitung mit Verlegung des (oder der) Zuleitungskabels 30 und Pigtail-Kabels 31 und der erst späteren Hinzufügung des Patchkabels 32 bei Herstellung z. B. eines Teilnehmerabschlusses, kann an die Erläuterung angeknüpft werden, die im allgemeinen Teil der Beschreibung gegeben wurden. Insbesondere erkennt man, dass z. B. bei der späteren Hinzufügung des Hausabschlusses durch Verlegen des Patchkabel 32 kein Zugang mehr zum Inneren des ersten Behälters 1 nötig ist und dessen z. B. durch eine Verplombung gesicherter Deckel nicht mehr geöffnet werden muss. Stattdessen können das oder die Patchkabel 32 durch ein in Figur 2 rechts unten an der EZA angeschlossenes Schutzrohr mit Ferrulen bewehrt in das Innere des zweiten Elements 2 eingeführt werden und dort die Ferrulen zu Steckern ergänzt werden, die dann an den Steckverbindungsplätzen 7 einfach angeschlossen werden.

## Patentansprüche

1. Vorrichtung zur Ablage zumindest einer Spleißstelle und Aufnahme einer Überlänge eines LWL-Kabels (30-32) mit
zumindest zwei relativ zueinander befestigten Elementen (1, 2),
wobei ein erstes der Elemente ein Behälter (1) mit einer Ablageeinrichtung (10) für die Spleißstelle in einem Innenraum des Behälters (1) ist,
ein zweites der Elemente eine Aufnahmeeinrichtung (2) für die Kabelüberlänge ist,
der Innenraum des ersten Elements (1) durch eine Trennwand (5) von dem zweiten Element (2) getrennt ist und
die Trennwand (5) Durchführeinrichtungen (6) zum Hindurchführen von LWL-Kabeln (30-32) aufweist,
**dadurch gekennzeichnet, dass** die Durchführeinrichtungen (6) Steckverbindungsplätze und/oder Soll-Ausbruchstellen für Aufnahmen für Steckverbindungsplätze beinhalten,
und dass
die Vorrichtung insgesamt die Außendimensionen 150 mm x 350 mm x 50 mm nicht überschreitet.

2. Ablagevorrichtung nach Anspruch 1, bei der die Aufnahmeeinrichtung (2) an einer von der Trennwand (5) verschiedenen Außenwand der Aufnahmeeinrichtung (2) Durchführeinrichtungen (23, 27) zum Hindurchführen von ein- und abgehenden LWL-Kabeln (30, 32) aufweist, insbesondere Einzelzugabdichtungen (EZA), wobei die Aufnahmeeinrichtung (2) vorzugsweise ein zweiter Behälter (2) ist.

3. Ablagevorrichtung nach einem der vorstehenden Ansprüche, bei der die Aufnahmeeinrichtung (2) ausgelegt ist zum Aufwickeln der Kabelüberlänge und dadurch eine Wicklungsebene vorgibt, wobei die beiden Elemente (1, 2) vorzugsweise in der Wicklungsebene vorzugsweise koplanar nebeneinander angeordnet und befestigt sind.

4. Ablagevorrichtung nach einem der vorstehenden Ansprüche, bei der die Aufnahmeeinrichtung (2) statisch ist, eine äußere Begrenzung für Kabelwicklungen und vorzugsweise Niederhalter (21) für Kabelwicklungen sowie eine innere Begrenzung für Kabelwicklungen aufweist.

5. Ablagevorrichtung nach einem der vorstehenden Ansprüche, bei der die Aufnahmeeinrichtung (2) ein zweiter Behälter (2) ist, der erste Behälter (1) unabhängig von dem zweiten Behälter (2) verschließbar (8) ist und der zweite Behälter (2) im verschlossenen Zustand des ersten Behälters (1) zugänglich ist.

6. Ablagevorrichtung nach den Ansprüchen 2 und 3, optional in Verbindung mit einem weiteren der vorstehenden Ansprüche, die dazu ausgelegt ist, dass ein LWL-Kabel (30) von einem Kabeleintritt durch eine Durchführeinrichtung (27) in der Außenwand des zweiten Elements (2) aus parallel zu der Wicklungsebene außerhalb des für die Kabelwicklungen vorgesehenen Bereichs (20) zu einer Durchführeinrichtung (6) in der Trennwand (5) geführt wird, wobei diese Durchführeinrichtung (6) von einer Mitte der Trennwand (5) beabstandet an einer Seite der Trennwand angeordnet ist und an einer entgegengesetzten Seite der Trennwand ein Steckverbindungsplatz für LWL-Kabel (31, 32) angeordnet ist und hiervon aus ein LWL-Kabel (32) tangential in den Bereich zur Aufnahme der Kabelwicklungen eingeführt werden kann, wobei vorzugsweise das Kabel (32) benachbart zu diesem tangentialen Zugang zu den Kabelwicklungen tangential von diesen abgehend zu einer Durchführeinrichtung (23) in der Außenwand des zweiten Elements (2) geführt werden kann.

7. Ablagevorrichtung nach einem der vorstehenden Ansprüche, wobei der erste Behälter die Außendimensionen 150 mm x 210 mm x 50 mm und/oder der zweite Behälter die Außendimensionen 150 mm x 140 mm x 50 mm nicht überschreitet.

8. Ablagevorrichtung nach einem der vorstehenden Ansprüche kombiniert mit einem die Ablagevorrichtung (1, 2) aufnehmenden Außengehäuse (43, 44) zum Erdeinbau, vorzugsweise zusätzlich kombiniert mit einem von dem Au-ßengehäuse (43, 44) getrennten, die Ablagevorrichtung (1, 2) ebenfalls aufnehmenden und seinerseits in dem Außengehäuse (43, 44) aufzunehmenden Abdichtgehäuse (40, 41).

9. Verwendung einer Vorrichtung (1, 2) nach einem der vorstehenden Ansprüche zum Aufnehmen zumindest einer Spleißstelle eines LWL-Kabels (30, 31) und einer Überlänge eines LWL-Kabels (32).

10. Verwendung nach Anspruch 9, bei der eine weitere Überlänge eines von einer niedrigeren Netzebene zu der Vorrichtung führenden LWL-Kabels (30) in dem ersten Element (1) aufgenommen wird und/oder eine Überlänge eines von der Ablagevorrichtung (1, 2) in Richtung zu einem Teilnehmerabschluss führenden ausgehenden LWL-Kabels (32) in der Aufnahmeeinrichtung aufgenommen wird.

11. Verwendung nach Anspruch 9 oder 10, bei der die Ablagevorrichtung (1, 2) so montiert ist oder wird, dass das erste Element (1) vertikal über dem zweiten Element (2) angeordnet ist, wobei im Fall des Anspruchs 3 die Wicklungsebene vertikal liegt.

12. Verwendung nach Anspruch 9, 10 oder 11, bei der von einer Teilnehmer-Abschlussseite aus ein mit einer Ferrule vorkonfektioniertes LWL-Kabel (32) durch ein an der Ablagevorrichtung (1, 2) bereits montiertes Schutzrohr hindurch in den zweiten Behälter (2) eingeführt wird und die Ferrule zu einem Steckelement ergänzt und in einen Steckverbindungsplatz in der Trennwand (5) eingesteckt wird.

13. Verwendung nach einem der Ansprüche 9 bis 12, bei der die Ablagevorrichtung (1, 2) zunächst ohne ein zu einem Teilnehmer-Abschluss führendes abgehendes LWL-Kabel (32), jedoch mit einem von einer niedrigeren Netzebene eingehenden LWL-Kabel (30) verbaut wird.

14. Verwendung nach einem der Ansprüche 9 bis 12, bei der eine gemäß Anspruch 13 vormontierte Vorrichtung (1, 2) zu einem späteren Zeitpunkt durch Ergänzung eines ausgehenden LWL-Kabels (32) an einen Teilnehmer-Abschluss angeschlossen wird.

15. Verwendung nach einem der Ansprüche 9 bis 14, und zwar einer Ablagevorrichtung (1, 2) nach Anspruch 8, bei der das Außengehäuse (43, 44) mit der darin aufgenommenen Ablagevorrichtung eingegraben wird.

16. Verwendung nach einem der Ansprüche 9 bis 15, bei der die beiden Elemente (1, 2) voneinander trennbar oder voneinander getrennt sind und das erste Element (1) oder ein dazu baugleiches weiteres Element als Spleißstellen-Ablageeinrichtung verwendet wird, ohne dass das zweite Element (2) mitverwendet wird.

## Claims

1. Storage device for storing at least one splice and receiving an excess length of an optical fiber cable (30-32) with
at least two elements (1, 2) fixed relative to each other,
wherein a first one of said elements is a first container (1) with a storage means (10) for the splice in an interior space of said first container (1),
a second one of the elements is a receiving device (2) for the excess cable length,
the interior space of the first element (1) is separated from the second element (2) by a partition wall (5), and
the partition wall (5) has feed-through devices (6) for feeding through fiber-optic cables (30-32),
**characterized in that** the feed-through devices (6) include plug-in connection locations and/or predetermined break-out locations for receptacles for plug-in connection locations,
and that the storage device doesn't exceed overall external dimensions of 150 mm x 350 mm x 50 mm.

2. Storage device according to claim 1, in which the receiving device (2) has, on an outer wall of the receiving device (2) different from the partition wall (5), feed-through devices (23, 27) for feeding through incoming and outgoing fiber-optic cables (30, 32), in particular individual cable seals (EZA), the receiving device (2) preferably being a second container (2).

3. Storage device according to one of the preceding claims, in which the receiving device (2) is designed for winding up the excess length of cable and thereby predetermines a winding plane, the two elements (1, 2) being arranged and fastened next to one another, preferably in the winding plane and preferably coplanar.

4. Storage device according to one of the preceding claims, in which the receiving device (2) is static, has an outer limiting means for cable windings and preferably hold-downs (21) for cable windings and an inner limiting means for cable windings.

5. Storage device according to one of the preceding claims in which the receiving device (2) is a second container (2), the first container (1) is closable (8) independently of the second container (2) and the second container (2) is accessible in the closed state of the first container (1).

6. Storage device according to claims 2 and 3, optionally in connection with another of the preceding claims, which is adapted for guiding an optical fiber cable (30) from a cable entry through a feed-through device (27) in the outer wall of the second element (2) parallel to the winding plane outside the area (20) provided for the cable windings to a feed-through device (6) in the partition wall (5), this feed-through device (6) being arranged at a distance from a center of the partition wall (5) on one side of the partition wall, and a plug-in connection location for optical fiber cables (31, 32) or a receptacle (7) provided therefor being arranged on an opposite side of the partition wall, and it being possible for an optical fiber cable (32) to be introduced tangentially from this location into the area for receiving the cable windings, wherein the cable (32) can preferably be guided adjacent to this tangential access to the cable windings tangentially departing therefrom to a feed-through device (23) in the outer wall of the second element (2).

7. Storage device according to one of the preceding claims, the first container not exceeding external dimensions of 150 mm x 210 mm x 50 mm and/or the second container not exceeding external dimensions of 150 mm x 140 mm x 50 mm.

8. Storage device according to one of the preceding claims combined with an outer housing (43, 44) for installation in the ground accommodating the storage device (1, 2), preferably additionally combined with a sealing housing (40, 41) which is separate from the outer housing (43, 44), likewise accommodates the storage device (1, 2) and in turn is to be accommodated in the outer housing (43, 44).

9. Use of a device (1, 2) according to one of the preceding claims for receiving at least one splice of an optical fiber cable (30, 31) and an excess length of an optical fiber cable (32).

10. Use according to claim 9, wherein a further excess length of an optical fiber cable (30) leading from a lower network level to the device is received in the first element (1) and/or an excess length of an outgoing optical fiber cable (32) leading from the storage device (1, 2) in the direction of a subscriber termination is received in the receiving device.

11. Use according to claim 9 or 8, wherein the storage device (1, 2) is mounted such that the first element (1) is arranged vertically above the second element (2), wherein in the case of claim 3 the winding plane is vertical.

12. Use according to claim 9, 10 or 11, in which from a subscriber termination side an optical fiber cable (32) prefabricated with a ferrule is inserted into the second container (2) through a protective tube already mounted on the storage device (1, 2) and the ferrule is completed to form a plug-in element and plugged into a plug-in connection location (7) in the partition wall (5).

13. Use according to any one of claims 9 to 12, wherein the storage device (1, 2) is initially installed without an outgoing optical fiber cable (32) leading to a subscriber termination, but with an incoming optical fiber cable (30) from a lower network level.

14. Use according to one of claims 9 to 12, wherein a device (1, 2) pre-assembled according to claim 13 is connected to a subscriber termination at a later time by adding an outgoing optical fiber cable (32).

15. Use according to one of claims 9 to 14, of a storage device (1, 2) according to claim 9, wherein the outer housing (43, 44) is buried with the storage device received therein.

16. Use according to one of claims 9 to 15, in which the two elements (1, 2) can be separated or are separated from one another and the first element (1) or a further element identical in construction thereto is used as a splice storage device without the second element (2) also being used.

## Revendications

1. Dispositif récepteur destiné à recevoir au moins un point d'épissure et à loger une surlongueur d'un câble à fibre optique (30-32), comportant :
au moins deux éléments (1, 2) fixés l'un par rapport à l'autre ;
un premier des éléments consistant en un premier réceptacle (1) doté d'un dispositif de réception (10) destiné au point d'épissure et situé dans un espace intérieur du premier réceptacle (1),
un deuxième des éléments consistant en un dispositif de logement (2) destiné à la surlongueur de câble,
l'espace intérieur du premier élément (1) étant séparé du deuxième élément (2) par une paroi de séparation (5), et
la paroi de séparation (5) présentant des dispositifs de traversée (6) destinés à la traversée de câbles à fibre optique (30-32);
**caractérisé en ce que** les dispositifs de traversée (6) contiennent des emplacements d'enfichage et/ou des points de rupture cibles pour des logements pour lesdits emplacements d'enfichage,
et **en ce que** les dimensions hors tout du dispositif récepteur ne dépassent pas les dimensions extérieures 150 mm x 350 mm x 50 mm.

2. Dispositif récepteur selon la revendication 1, dans lequel le dispositif de logement (2) présente, au niveau d'une paroi extérieure dudit dispositif de logement (2) qui est différente de la paroi de séparation (5), des dispositifs de traversée (23, 27), notamment des éléments d'étanchéité divisibles (EZA, Einzelzugabdichtungen en allemand), qui permettent la traversée de câbles à fibre optique (30, 32) entrants et sortants, ledit dispositif de logement (2) consistant de préférence en un deuxième réceptacle (2).

3. Dispositif récepteur selon l'une des revendications précédentes, dans lequel le dispositif de logement (2) est conçu pour enrouler la surlongueur de câble et définit ainsi un plan d'enroulement, les deux éléments (1, 2) étant de préférence agencés et fixés de façon coplanaire l'un à côté de l'autre dans le plan d'enroulement.

4. Dispositif récepteur selon l'une des revendications précédentes, dans lequel le dispositif de logement (2) est stationnaire, et présente une délimitation extérieure pour enroulements de câble et de préférence des organes de retenue (21) pour enroulements de câble ainsi qu'une délimitation intérieure pour enroulements de câble.

5. Dispositif récepteur selon l'une des revendications précédentes, dans lequel le dispositif de logement (2) consiste en un deuxième réceptacle (2), le premier réceptacle (1) étant refermable (8) indépendamment du deuxième réceptacle (2) et le deuxième réceptacle (2) étant accessible lorsque le premier réceptacle (1) est à l'état refermé.

6. Dispositif récepteur selon l'une des revendications 2 et 3, éventuellement en association avec une autre des revendications précédentes, conçu pour qu'un câble à fibre optique (30) soit mené, à partir d'une entrée pour câble et en traversant un dispositif de traversée (27) présent dans la paroi extérieure du deuxième élément (2), parallèlement au plan d'enroulement mais à l'extérieur de la zone (20) prévue pour les enroulements de câble, jusqu'à un dispositif de traversée (6) présent dans la paroi de séparation (5), ce dispositif de traversée (6) étant écarté du centre de la paroi de séparation (5) et situé sur un côté de ladite paroi de séparation et un emplacement d'enfichage destiné aux câbles à fibre optique (31, 32) étant situé sur un côté opposé de ladite paroi de séparation, à partir duquel un câble à fibre optique (32) peut être introduit tangentiellement dans la zone destinée à loger les enroulements de câble, ledit câble (32) pouvant, de préférence de manière adjacente à cet accès tangentiel aux enroulements de câble, être mené tangentiellement à partir de ceux-ci vers un dispositif de traversée (23) présent dans la paroi extérieure du deuxième élément (2).

7. Dispositif récepteur selon l'une des revendications précédentes, dans lequel le premier réceptacle ne dépasse pas les dimensions extérieures 150 mm x 210 mm x 50 mm et/ou le deuxième réceptacle ne dépasse pas les dimensions extérieures 150 mm x 140 mm x 50 mm.

8. Dispositif récepteur selon l'une des revendications précédentes, combiné à un boîtier extérieur (43, 44) logeant le dispositif récepteur (1, 2) et destiné à un enfouissement en terre, combiné en outre de préférence à un boîtier d'étanchéité (40, 41) séparé du boîtier extérieur (43, 44) et logeant également le dispositif récepteur (1, 2) tout en étant logé lui-même dans le boîtier extérieur (43, 44).

9. Utilisation d'un dispositif (1, 2) selon l'une des revendications précédentes destiné au logement d'au moins un point d'épissure d'un câble à fibre optique (30, 31) et d'une surlongueur d'un câble à fibre optique (32).

10. Utilisation selon la revendication 9, dans le cadre de laquelle une autre surlongueur d'un câble à fibre optique (30) menant d'un niveau réseau inférieur audit dispositif est logée dans le premier élément (1) et/ou une surlongueur d'un câble à fibre optique (32) sortant, menant du dispositif récepteur (1, 2) vers une terminaison d'abonné, est logée dans le dispositif de logement.

11. Utilisation selon la revendication 9 ou 10, dans le cadre de laquelle le dispositif récepteur (1, 2) présente ou subit un montage de telle manière que le premier élément (1) est disposé verticalement au-dessus du deuxième élément (2) ; le plan d'enroulement se trouvant orienté verticalement, dans le cas de la revendication 3.

12. Utilisation selon la revendication 9, 10 ou 11, dans le cadre de laquelle un câble à fibre optique (32) préconfectionné avec une ferrule est introduit, en partant d'un côté terminaison d'abonné, dans le deuxième réceptacle (2), en passant par une gaine de protection préalablement montée sur le dispositif récepteur (1, 2) et la ferrule est complétée pour former un élément d'enfichage et enfichée dans un emplacement d'enfichage (7) présent dans la paroi de séparation (5).

13. Utilisation selon l'une des revendications 9 à 12, dans le cadre de laquelle le dispositif récepteur (1, 2) est tout d'abord installé sans câble à fibre optique (32) sortant menant à une terminaison d'abonné, mais avec un câble à fibre optique (30) entrant en provenance d'un niveau réseau inférieur.

14. Utilisation selon l'une des revendications 9 à 12, dans le cadre de laquelle un dispositif (1, 2) prémonté selon la revendication 13 est raccordé à un instant ultérieur à une terminaison d'abonné avec un complément apporté par un câble à fibre optique (32) sortant.

15. Utilisation selon l'une des revendications 9 à 14 d'un dispositif récepteur (1, 2) selon la revendication 8, dans le cadre de laquelle le boîtier extérieur (43, 44) présentant le dispositif récepteur logé dans ce dernier est enfoui.

16. Utilisation selon l'une des revendications 9 à 15, dans le cadre de laquelle les deux éléments (1, 2) sont séparables ou séparés l'un de l'autre et le premier élément (1) ou un autre élément de conception identique est utilisé comme dispositif de réception de point d'épissure, sans utilisation simultanée du deuxième élément (2).
